# EUROPEAN PATENT APPLICATION

(11) **EP 0 905 429 A2**
(43) Date of publication of application: **31.03.1999**
(21) Application number: 98117705.8
(22) Date of filing: 18.09.1998
(51) Int. Cl.: F16L 33/02

(54) **Low-cost high-grip hose clamp**

(30) Priority: 29.09.1997 IT MI970693 U
(71) Applicant: TALPO, Giovanni, 27025 GAMBOLO' (PV) (IT)
(72) Inventor: TALPO, Giovanni, 27025 GAMBOLO' (PV) (IT)
(74) Representative: Modiano, Guido, Dr.-Ing.

(57) **Abstract**

A low-cost high-grip hose clamp comprising a band (1) provided with at least one set of teeth (2) at least at its ends, the set of teeth (2) allowing a self-engagement and self-clamping of the band that constitutes the hose clamp.

## Description

The present invention relates to a low-cost high-grip hose clamp.

It is known that hose clamps of various kinds and with different mechanical characteristics are currently commercially available.

A first kind of clamp is constituted by those provided with a strip and a cotter pin, which have the advantage of being inexpensive but suffer the drawback that they do not allow to control the mechanical characteristics of the closure.

A second type of hose clamp has a strip-like band with an applied locking hook; its advantages and shortcomings are similar to those of the preceding type.

A third type of hose clamp is instead of the deformation type, which has good mechanical characteristics but a limited diameter range and accordingly entails the need to have considerable stock assortment in order to meet the requirements of different diameters; moreover, the closure method does not allow accurate control of the clamping force.

A fourth type of hose clamp is provided by means of elastic elements of various kinds, with various shapes and coupling systems; in this case too, only small diameter ranges are possible, with the drawback that it is necessary to have a large number of sizes available in order to meet the user's requirements.

A fifth type of hose clamp has a structure with a worm screw and a band, in which the worm screw is accommodated in an appropriate seat, which is formed on a first end of the band and in which the second end of said band is inserted for locking and clamping.

The drawback of this type of hose clamp is, apart from the cost, mainly the fact that the seat of the worn screw can break when subjected to tension, consequently loosening the hose clamp.

The aim of the present invention is to provide a low-cost high-grip hose clamp which is formed monolithically and allows accurate adjustment of the clamping force.

Within the scope of this aim, an object of the present invention is to provide a low-cost high-grip hose clamp which is simple to apply.

Another object of the present invention is to provide a hose clamp which can adapt to different hose diameters.

This aim, these objects and others which will become apparent hereinafter are achieved by a low-cost high-grip hose clamp, characterized in that it comprises a band provided with at least one set of teeth at least at its ends, said set of teeth allowing a self-engagement and self-clamping of said band that constitutes the hose clamp.

Further characteristics and advantages of the present invention will become apparent from the following detailed description of an embodiment thereof, illustrated only by way of non-limitative example in the accompanying drawings, wherein:
Figure 1 is a perspective view of a hose clamp according to the present invention; and
Figure 2 is a perspective view of a different embodiment of the hose clamp according to the present invention.

With reference to the above figures, the hose clamp according to the invention comprises a band 1 in which at least one set of teeth is provided, the teeth 2 whereof have a preset pitch and a variable shape, for example square, rectangular, rounded etcetera.

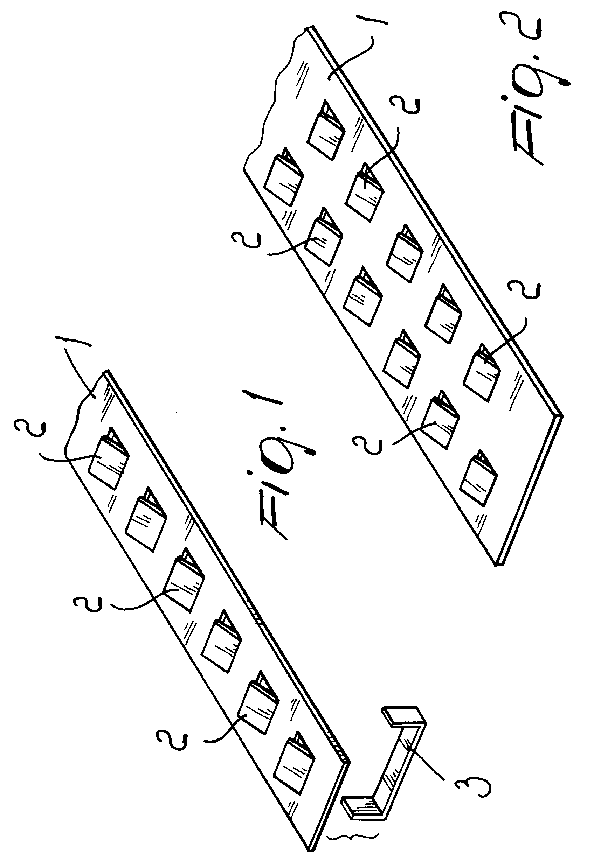

Advantageously, it is possible to provide, as shown in Figure 2, two or more sets of teeth arranged side by side on the band 1, with teeth 2 which are mutually staggered or parallel.

Moreover, the teeth 2 can be obtained from the band 1 by blanking, forming teeth which are raised with respect to the surface of the band 1, are connected to the band at one side and are folded upward (or, as an alternative, downward) with a slot below them which is engaged by another tooth of the set of teeth when the hose clamp is tightened around a hose so that the band 1 makes more than one turn around the hose.

As an alternative, the teeth 2 can be obtained from the band 1 by punching or alternative methods, so as to provide in any case protrusions which are suitable to mutually engage during the tightening of the hose clamp on the hose.

It is also possible to provide a band 1 which is not flat but has raised edges, so that the teeth are arranged at an angle with respect to an imaginary horizontal plane.

In the case of a single set of teeth, the width of the teeth 2 can be such as to occupy the entire width of the band 1 or can occupy the band 1 only partially.

The hose clamp according to the invention can be provided by means of a continuous band 1, so that there are no problems in choosing a size which is suitable for the diameter of the hose to be clamped, thus allowing to drastically reduce stock reserves.

In order to provide easier tightening of the band 1, it is possible to provide at least one supporting element, designated by the reference numeral 3 in Figure 1, which is suitable to constitute a grip point for a tightening tool such as pliers and the like.

The pitch of the teeth 2 determines the adjustment degree of the clamping force and allows to graduate the tension applied by the hose clamp in the clamping position.

The hose clamp according to the invention can be made of any material, including plastics and metal as well as metal alloys.

In practice it has been observed that the hose clamp according to the invention fully achieves the intended aim and objects, since it allows to provide a clamping action which is simple and can be graduated precisely, in addition to being very strong and economical from the point of view of production.

Moreover, the hose clamp thus produced is monolithic and this allows to easily subject it to strength tests, so as to be able to obtain a quality certification which is otherwise not possible with conventional hose clamps, in which the various components are a hindrance to determining a strength value because there are many variables involved.

The possibility to have a continuous band that constitutes the hose clamp also eliminates the problem of selecting exact dimensions for the band to be used according to the diameter of the hose around which the hose clamp must be placed. This entails the advantage of eliminating the stock reserves of hose clamp manufacturers, since the continuous band meets every user requirement.

In practice, the materials employed, so long as they are compatible with the specific use, as well as the dimensions, may be any according to requirements and to the state of the art.

The disclosures in Italian Utility Model Application No. MI97U000693 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A low-cost high-grip hose clamp, characterized in that it comprises a band provided with at least one set of teeth at least at its ends, said set of teeth allowing the self-engagement and self-clamping of said band that constitutes the hose clamp.

2. The hose clamp according to claim 1, characterized in that the teeth of said set of teeth have a variable pitch.

3. The hose clamp according to claim 1, characterized in that it comprises two or more sets of teeth arranged side by side.

4. The hose clamp according to claim 1, characterized in that said at least one set of teeth is formed by blanking said band.

5. The hose clamp according to claim 1, characterized in that said at least one set of teeth is provided by punching.

6. The hose clamp according to claim 2, characterized in that said two or more sets of teeth arranged side by side have teeth whose pitch is staggered from one set of teeth to the next.

7. The hose clamp according to claim 1, characterized in that it comprises at least one support for facilitating the tightening of said hose clamp by means of a tool.

8. The hose clamp according to claim 1, characterized in that said at least one set of teeth is narrower than the width of said band.

9. The hose clamp according to claim 1, characterized in that said at least one set of teeth has a width which is equal to the width of said band.

10. The hose clamp according to claim 1, characterized in that it is formed monolithically.
